Europäisches Patentamt

European Patent Office

Office européen des brevets

(11) Veröffentlichungsnummer: **0 318 711 B1**

# EUROPÄISCHE PATENTSCHRIFT

(45) Veröffentlichungstag der Patentschrift: **08.01.92**

(51) Int. Cl.5: **B64D 11/00**

(21) Anmeldenummer: **88118211.7**

(22) Anmeldetag: **03.11.88**

(54) **Gepäckablage für Fahrzeuge, insbesondere Flugzeuge.**

(30) Priorität: **04.12.87 DE 3741164**

(43) Veröffentlichungstag der Anmeldung:
**07.06.89 Patentblatt 89/23**

(45) Bekanntmachung des Hinweises auf die
Patenterteilung:
**08.01.92 Patentblatt 92/02**

(84) Benannte Vertragsstaaten:
**FR GB IT NL**

(56) Entgegenhaltungen:
**DE-C- 35 971**
**US-A- 4 383 392**

(73) Patentinhaber: **Deutsche Airbus GmbH**
**Arabellastrasse. 30**
**W-8000 München 81(DE)**

(72) Erfinder: **Bock, Thomas**
**415, chemin de Planette**
**F-31700 Aussonne(FR)**
Erfinder: **Schwertfeger, Günther**
**4, clos des Cordabelles**
**F-31170 Tournefeuille(FR)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Gepäckablage für Fahrzeuge, insbesondere Flugzeuge, die mittels Trennwände in Einzelfächer unterteilt und in einer Überkopf-Konfiguration zu den Passagieren in Längsrichtung des Fahrzeuges angeordnet ist und deren Einzelfächer jeweils durch eine Klappe verschließbar sind.

Derartige Gepäckablagen werden bekannterweise in Autobusse, Eisenbahnwagen und Flugzeuge eingebaut, wobei angenommen wurde, daß mittels einer ein Einzelfach verschließenden Klappe eine vollständige Sicherheit gegen ein Heraus- und Herunterfallen der Gepäckstücke gewährleistet sei. Diese Annahme konnte im Betrieb nicht bestätigt werden, da beim Öffnen der Klappe sehr häufig die Gepäckstücke entweder dem die Klappe betätigenden und unvorbereiteten Passagier entgegenrutschten und auf den unter der Gepäckablage sitzenden Passagier mit erheblichen Verletzungsfolgen oder beschädigt zu Boden fallen. Gleichfalls können sich die Klappen während und durch den Fahr- bzw. Flugbetrieb selbsttätig mit den vorher genannten Folgen öffnen.

Hier setzt nun die Erfindung ein, der die Aufgabe zugrunde liegt, eine Überkopf-Gepäckablage derart zuverbesern, daß die Gepäckstükke stets vollständig gegen ein Heraus- oder Herunterfallen gesichert sind, bei der jedoch keinerlei Behinderung für die Öffnung der Klappe beim Belade- bzw. Entladevorgang eintreten kann.

Diese Aufgabe wird durch die im Anspruch 1 aufgezeigten Maßnahmen gelöst.

Aus den Unteransprüchen gehen vorteilhafte Weiterbildungen hervor.

Die erfindungsgemäße Gepäckablage hat den Vorteil, daß Gepäckstücke selbst bei unsachgemäßer Ablage auf der Gepäckablage, wie beispielsweise einer Schrägstellung durch ein Kleidungsstück, sicher zurückgehalten werden und weder kopfverletzungsgefährdend für einen die Klappe öffnenden Passagier außerhalb der vorgegebenen Kontur rutschen noch herunterfallen können. Das Arretieren bzw. Zurückhalten der Gepäckstücke ist durch die Gewichtsbelastung der Sicherheitsklappe bzw. von deren Nase in die richtige Position gesichert; bei einem vorteilhaften Ausführungsbeispiel erlaubt außerdem der transparente Werkstoff der Sicherheitsklappe ein gefährdetes Gepäckstück zu erkennen und mittels einer sichernden Fangbewegung oder eines manuellen Durchgriffs durch die in der Sicherheitsklappe vorzugsweise vorgesehenen Ausschnitte zu korrigieren. Dies ist dann von großer Wichtigkeit, wenn zur Erzielung einer ausreichenden Stehhöhe bei maximaler Platzausnützung für das Gepäck, sich die Überkopf-Gepäckablage nach unten verjüngt und z.B. ein Koffer einen Überhang bildet und dabei mit den entsprechenden Folgen außer Gleichgewicht geraten kann. Außerdem stellt die Sicherheitsklappe weder für das Personal noch für die Passagiere beim Öffnungs- bzw. Belade- und Entladevorgang der Gepäckablage eine Behinderung dar, da die Sicherheitsklappe bei diesen Vorgängen manuell oder selbsttätig aus dem Be- und Entladebereich schwenkbar ist.

Die Erfindung wird nachfolgend anhand eines Ausführungsbeispiels näher beschrieben und in der Zeichnung dargestellt. Es zeigen

Fig. 1    einen Schnitt durch die Gepäckablage bei geschlossener Klappe in schematischer Darstellung,

Fig. 2    einen Schnitt durch die Gepäckablage nach Fig. 1, jedoch bei geöffneter Klappe.

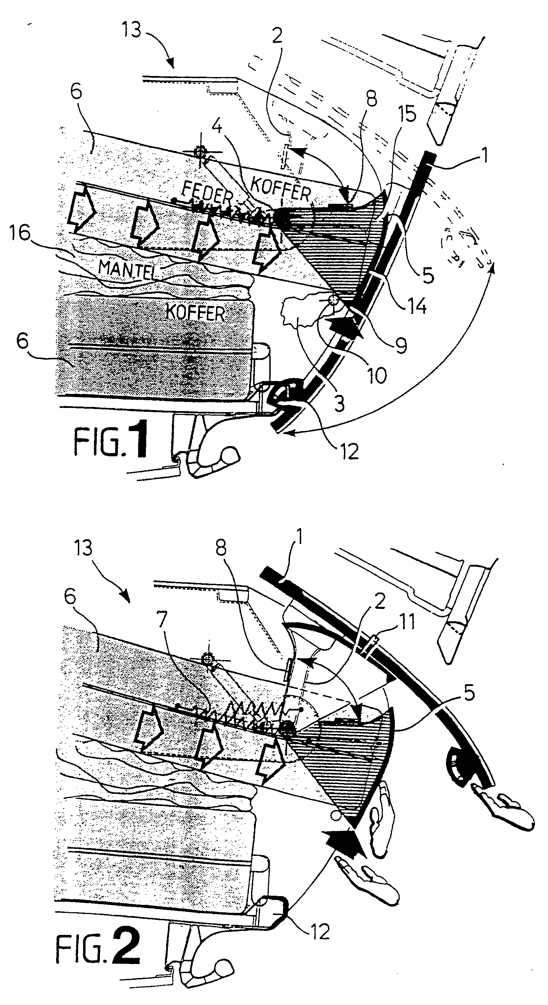

Aus der Fig. 1 ist eine Klappe 1 ersichtlich, die mittels Arme 2 an den Lagern 4 schwenkbar angelenkt ist und die in einer unteren, d.h. in einer Position dargestellt ist, in der sie die Gepäckablage 13 vollständig abschließt und in der sie bei 12 arretiert ist. Am gleichen Lager 4, das an einer seitlichen, die Einzelfächer der Gepäckablage bildenden Trennwand 3 angeordnet ist, ist eine zur Innenseite der Klappe 1 gewandte Sicherheitsklappe 5 gelagert, die aus einer Stirnfläche 14 und aus Seitenteilen 15 für die Lagerung der Sicherheitsklappe 5 bestehen kann.

In der gezeigten Position nimmt die Sicherheitsklappe 5 bereits ein durch ein Kleidungsstück 16 - hier ein Mantel - schräggestelltes gepäckstück6, wie z.B. eine Koffer auf. Der Koffer drückt dabei in Pfeilrichtung mit seinem Gewicht gegen den unteren Teil der Sicherheitsklappe 5 und drückt diese für eine sichere Auflage gegen einen an der Trennwand 3 befestigten Auflagepunkt 10, wobei eine an der Sicherheitsklappe 5 angeordnete Nase 9 einen weiteren Anlagepunkt für den Koffer bilden kann und gleichzeitig verhindert, daß der Koffer unter der Klappe durchrutscht. Ein weiterer Rückhaltepunkt wird weiter unten durch eine Arretierungseinrichtung bei 12 gebildet.

Die in Pfeilrichtung nach oben verschwenkbare Klappe 1 ist in der Fig. 2 in der geöffneten Position dargestellt, wobei die Sicherheitsklappe 5 nach wie vor das ansonsten herunterfallende Gepäckstück 6 zurückhält. Der das Gepäckstück 6 entnehmende Passagier erkennt durch den transparenten Werkstoff der Sicherheitsklappe 5 die gefährdete Position des Gepäckstückes 6 und kann nun durch Hochschieben der Sicherheitsklappe 5 bei einer gleichzeitigen Auffangbewegung mit der zweiten Hand - wie in Fig. 2 dargestellt - den gefährdeten Koffer sicher auffangen. Die Sicherheitsklappe 5 kann zudem in der Stirnfläche 14 über nicht dargestellte Ausschnitte verfügen, durch die der Passagier das Gepäckstück 6 nanuell zurückschieben kann, bevor er die Sicherheitsklappe 5 verschwenkt.

Zur Hilfestellung beim Verschwenken der Sicherheitsklappe 5 kann eine an dieser und an der Trennwand 3 angelenkte Feder 7 oder ein ähnlicher Kraftspeicher dienen, der bei fehlender Belastung z.B. totpunktüberschreitend, d.h. über das Lager 4 hinweg, die Sicherheitsklappe 5 mit hochschwenkt.

Ein am Arm 2 vorgesehener Mitnehmer 8 bewegt die Sicherheitsklappe 5 mit der Schwenkbewegung der Klappe 1 in etwa wieder in die waagerechte Position (Verschlußstellung), in der sie mittels der den Drehpunkt überschreitenden Feder auf dem Auflagepunkt 10 haltbar ist. Dieser Schwenkweg wird mittels des Kreisbogenpfeils in den Fig. 1 und 2 angedeutet.

Die Sicherheitsklappe 5 kann außerdem mit der Klappe 1 über einen weiteren Mitnehmer 11 verbunden sein, der über einen leichten Reibschluß die Sicherheitsklappe 5 mit der klappe 1 mit nach oben bewegt, um ein unbehindertes Beladen der Gepäckablage 13 durch die Passagiere zu ermöglichen.

Aus dem gleichen Grund kann der weitere Mitnehmer 11 durch das Personal, aber auch durch den Passagier beim Hochheben der Klappe 1 in einer bekannten und daher nicht weiter dargestellten Weise so betätigt werden, daß ein entsprechend leichter, evtl. kurzfristiger Reibschluß entsteht, durch den die Sicherheitsklappe 5 nach oben mitverschwenkt wird.

Somit wurde eine für die Passagiere sichere Gepäckablage geschaffen, die selbsttätig bzw. bei sehr leichter Bedienbarkeit die vollständige Sicherung der Gepäckstücke gewährleistet.

**Patentansprüche**

1. Gepäckablage für Fahrzeuge, insbesondere Flugzeuge, die mittels Trennwände in Einzelfächer unterteilt und in einer Überkopf-Konfiguration zu den Passagieren in Längsrichtung des Fahrzeuges angeordnet ist und deren Einzelfächer jeweils durch eine Klappe verschließbar sind, dadurch gekennzeichnet, daß eine nach oben schwenkbare Klappe (1) seitlich fest angeordnete und in Verschlußstellung nach innen weisende Arme (2) aufweist, die drehbar in an den Trennwänden (3) vorgesehenen Lagern (4) angelenkt sind und daß eine ebenfalls nach oben schwenkbare Sicherheitsklape (5) mittels seitlich angeordneter und bei Verschlußstellung nach innen weisender Seitenteile (15) ebenfalls drehbar an denselben Lagern (4) angelenkt ist, wobei in Verschlußstellung der Sicherheitsklappe (5) bzw. Klappe (1) die Außenseite der Sicherheitsklappe (5) zur Innenseite der Klappe (1) weist, und wobei zur Arretierung von Gepäckstücken (6) bei geöffneter Klappe (1) die Sicherheitsklappe (5) mittels einer an der Trennwand (3) befestigten Feder (7) in Verschlußstellung haltbar ist, jedoch unter leichter manueller Krafteinwirkung und mit Hilfe der totpunktüberschreitenden Feder (7) nach oben in der die Gepäckstücke (6) freigebende Position schwenkbar ist und daß durch die Schließbewegung der Klappe (1) nach unten, die Sicherheitsklappe (5) über einen an einem Arm (2) der Klappe (1) angeordneten Mitnehmer (8) wiederum in Verschlußstellung bringbar ist.

2. Gepäckablage nach Anspruch 1, dadurch gekennzeichnet, daß die Sicherheitsklappe (5) eine nach innen weisende Nase (9) aufweist, mittels der die Sicherheitsklappe (5) unter der Belastung von Gepäckstücken (6) in Richtung bzw. gegen einen trennwandseitigen (3) Auflagepunkt (10) nach unten drückbar ist.

3. Gepäckablage nach Anspruch 1, dadurch gekennzeichnet, daß die Sicherheitsklappe (5) aus einem transparenten Werkstoff besteht.

4. Gepäckablage nach den Ansprüchen 1 und 3, dadurch gekennzeichnet, daß die Sicherheitsklappe (5) Ausschnitte für einen Durchgriff zu den Gepäckstücken (6) aufweist.

5. Gepäckablage nach einem oder mehreren der vorhergehenden Ansprüche 1 bis 4, dadurch gekennzeichnet, daß die Feder (7) an der Trennwand (3) und an der Sicherheitsklappe (5) derart im Abstand zu dem Lager (4) angeordnet ist, daß bei fehlender Belastung der Sicherheitsklappe (5) durch die Gepäckstücke (6), erste selbsttätig nach oben verschwenkbar ist.

6. Gepäckablage nach einem oder mehreren der vorhergehenden Ansprüche 1 bis 5, dadurch gekennzeichnet, daß zwischen der Sicherheitsklappe (5) und der Klappe (1) bzw. an einer von beiden ein mit einem leichtem Reibschluß wirkender weiterer Mitnehmer (11) vorgesehen ist, mittels dem bei fehlender Belastung der Sichheitsklappe (5), diese mit der Klappe (1) nach oben mitbewegbar ist.

7. Gepäckablage nach Anspruch 6, dadurch gekennzeichnet, daß der weitere Mitnehmer (11) manuell auf Reibschluß betätigbar ist.

**Claims**

1. A luggage repository for vehicles, more particularly aircraft, which is subdivided into individual compartments with the aid of separating walls and is arranged in an overhead configuration with respect to the passengers longitudinally of the vehicle and the individual compartments of which are respectively closable by a flap, **characterised in that** an upwardly pivotal flap (1) has arms (2) which are fixed laterally and point inwards in the closed position, said arms being hinged (pivotally) in bearings (4) provided on the separating walls (3) and that a similarly upwardly pivotal safety flap (5) is also hinged rotatably on the same bearings (4) with the aid of laterally arranged side parts (15) pointing inwards in the closed position, in which in the closed position of the safety flap (5) or flap (1) the outside of the safety flap faces the inside of the flap (1) and in which in order to retain items of luggage (6) when the flap (1) is open the safety flap (5) can be kept in the closed position with the aid of a spring (7) fixed to the separating wall (3), but with slight manual force and with the aid of the spring (7), which passes over dead centre, can be pivoted upwards in the position releasing the items of luggage (6), and that through the closure movement of the flap (1) downwards the safety flap (5) may in turn be brought into the closed position by means of a follower (8) arranged on one arm (2) of the flap (1).

2. A luggage repository according to claim 1, **characterised in that** the safety flap (5) has an inwardly pointing projection (9) with the aid of which the safety flap (5) can be pressed downwards under the load of items of luggage (6) in the direction of or against a bearing point (10) which is on the side of the separating wall (3).

3. A luggage repository according to claim 1, **characterised in that** the safety flap (5) consists of a transparent material.

4. A luggage repository according to claims 1 and 3, **characterised in that** the safety flap (5) has recesses for access to the luggage items (6).

5. A luggage repository according to one or more of the preceding claims 1 to 4, **characterised in that** the spring (7) is arranged on the separating wall (3) and on the safety flap (5) at a spacing to the bearing (4) such that, when there is no load on the safety flap (5) from the items of luggage (6), the former is pivoted automatically upwards.

6. A luggage repository according to one or more of the preceding claims 1 to 5, **characterised in that** between the safety flap (5) and the flap (1) or on one of the two there is provided a further follower (11) acting with a slight friction contact, with the aid of which, when there is no load on the safety flap (5), the said flap (5) is also moved with the flap (1) upwards.

7. A luggage repository according to claim 6, **characterised in that** the further follower (11) is actuated manually with friction contact.

**Revendications**

1. Emplacement à bagages pour véhicules notamment avions, qui est subdivisé en compartiments séparés par des cloisons, au-dessus de la tête des passagers, dans la direction longitudinale du véhicule, les différents compartiments pouvant être fermés par un volet, caractérisé par un volet (1) basculant vers le haut, fixé latéralement et ayant des bras (2) tournés vers l'intérieur, en position de fermeture, ces bras étant articulés sur des paliers (4) prévus sur les cloisons (3) et un volet de sécurité (5) qui peut également pivoter vers le haut est articulé en rotation sur les mêmes paliers (4) par des parties latérales (15) tournées vers l'intérieur en position de fermeture et qui sont prévues latéralement sur le volet, en position de fermeture du volet de sécurité (5) ou du volet (1), le côté extérieur du volet de sécurité (5) étant tourné vers le côté intérieur du volet (1) et pour retenir des bagages (6), lorsque le volet (1) est ouvert, le volet de sécurité (5) est maintenu en position de fermeture par un ressort fixé à la cloison (3), mais peut sous une légère force et à l'aide d'un ressort (7) passant une position métastable, se relever par pivotement et de libérer la position d'accès aux bagages (6) et en ce que par le mouvement de fermeture du volet (1), vers le bas, le volet de sécurité (5) est de nouveau mis en position de fermeture par l'intermédiaire d'un organe d'entraînement (8) prévu sur un bras (2) du volet (1).

2. Emplacement à bagages selon la revendication 1, caractérisé en ce que le volet de sécurité (5) comporte un bec (9) tourné vers l'intérieur et qui permet d'enfoncer en direction ou vers un point d'appui (10) du côté de la cloison (3) le volet de sécurité (5) soumis à des contraintes exercées par les bagages (6).

3. Emplacement de bagages selon la revendication 1, caractérisé en ce que le volet de sécurité (5) est réalisé en un matériau transparent.

4. Emplacement à bagages selon les revendications 1 et 2, caractérisé en ce que le volet de sécurité (5) comporte des découpes pour accéder aux bagages (6).

5. Emplacement à bagages selon l'une ou plusieurs des revendications précédentes 1 à 4, caractérisé en ce que le ressort (7) est prévu sur la cloison (3) et sur le volet de sécurité (5) à une distance telle du palier (4), qu'en l'absence de contrainte, le volet de sécurité (5) se relève d'abord automatiquement par pivotement, du fait des bagages (6).

6. Emplacement à bagages selon l'une ou plusieurs des revendications précédentes 1 à 5, caractérisé en ce qu'entre le volet de sécurité (5) ou le volet (1) ou un organe d'entraînement prévu sur ces deux volets ou coopérant avec l'un d'entre eux avec une faible liaison par frottement, cet organe d'entraînement peut être relevé avec le volet (1) en l'absence de charge sur le volet de sécurité (5).

7. Emplacement à bagages selon la revendication 6, caractérisé en ce que l'autre organe d'entraînement (11) peut être actionné manuellement avec liaison par frottement.

FIG.1

FIG.2